# EUROPEAN PATENT SPECIFICATION

(11) **EP 2 127 914 B1**
(45) Date of publication and mention of the grant of the patent: **12.10.2011**
(21) Application number: 09161278.8
(22) Date of filing: 27.05.2009
(51) Int. Cl.: B60D 1/52

(54) **Detachable towing hook element**
Abnehmbares Anhängerkupplungsteil
Dispositif d'attelage amovible

(30) Priority: 27.05.2008 NL 2001621
(43) Date of publication of application: 02.12.2009
(73) Proprietor: Terwa B.V., 3401 MZ IJsselstein (NL)
(72) Inventor: Som, Michiel Johannes Maria, 4941 JG Raamsdonksveer (NL); Scheeve, Edwin Adrijan, 4911 AX Den Hout (NL)
(74) Representative: Ketelaars, Maarten F.J.M.

(56) References cited:
- EP-A- 0 223 996
- EP-A- 0 455 251
- EP-A- 0 736 401
- EP-A- 1 526 010
- EP-A- 1 829 716
- NL-C1- 1 008 215

## Description

The present invention relates to a towing hook end element assembly comprising a ball end with a ball element, a rod and a primary means of coupling, an accommodation element provided with a means of fastening for fastening to a towing hook construction and secondary means of coupling, wherein the primary and secondary means of coupling can interlock and unlock interactively, wherein the primary means of coupling comprises a coupling pin with a primary longitudinal axis, and a locking pin attached that can be moved within the coupling pin, with a secondary longitudinal axis, wherein the primary extremity of said locking pin can move out of the coupling pin, wherein said secondary means of coupling comprises an accommodation embodied to receive the coupling pin and the extremity of the locking pin that can be moved out of the coupling pin.

Such an assembly is known from EP 0223996A and NL1008215C. By using a locking pin that can be moved within the coupling pin, with the related operation in combination with a lug in the means of coupling of the accommodation element and an interacting recess in the coupling pin, the coupling pin can be engaged into the accommodation in a secure manner. If the fastening is incorrect, then when a load is applied and/or by gravitational force, the ball end will move out of the accommodation automatically. This construction ensures that only these two situations can occur, thus realizing a particularly safe design.

In attempting to size the various components as compact as possible, and to save on materials, but also to retain sufficient safety characteristics, some limits have to be met.

The aim of the present invention is to provide an improved assembly wherein the sizing of the various components can be embodied more effectively, i.e more efficient and/or safer and/or increased saving on materials.

The assembly as described above realizes this aim in that the primary and secondary longitudinal axes are at an angle of at least 2° from each other. Also the coupling pin comprises a primary auxiliary device as well as a secondary auxiliary device, closer to the primary extremity of the locking pin, both engaging the locking pin, wherein the secondary longitudinal axis of said locking pin is arranged such that it angles away from the secondary auxiliary device toward the primary auxiliary device in the direction of the secondary auxiliary device in relation to the longitudinal axis of the coupling pin.

Since, according to the present invention, the longitudinal axis of the locking pin is positioned at a slight angle to the longitudinal axis of the coupling pin, considerable space can be gained inside of the coupling pin where other components can be accommodated, in particular auxiliary devices. Consequently the outer circumference of the coupling pin can be smaller and/or the strength of it can be increased. The auxiliary devices can take the form of a force-absorbing pin and/or a cog wheel. By positioning the longitudinal axes at an angle extra space is created for the auxiliary devices that are located in the centre part of the coupling pin. As a result the construction can be made lighter and/or stronger.

In this manner, in a particular arrangement, it is possible to accommodate (a part of) the bore for the force-absorbing pin in the free space created. The bore can be regarded as an auxiliary device, in particular the primary auxiliary device. This means that the force-absorbing pin is not made weaker, or is weakened less in the part of it extending through the coupling pin. Such a force-absorbing pin preferably extends perpendicular to the coupling pin and is attached into a corresponding recess in the accommodation element with the ball end in its coupled state. A more stable grip between said force-absorbing pin and this recess can be achieved by making one of the interacting surfaces of them flattened. More particularly, the force-absorbing pin is provided with a flattened surface. This flattened surface extends in the direction of insertion from the ball end into the accommodation element. Another component that can be improved due to the slight angle between the longitudinal axis of the coupling pin and that of the locking pin as described above is a cog wheel that can be mounted, which is to be regarded as an auxiliary device - in particular a secondary auxiliary device - that engages teeth on the locking pin to move the locking pin back and forth. Such a cog wheel can be driven by means of a rotary knob located on the outside of the primary means of coupling. Such a rotary knob can be provided with means of colour indication such that the position is indicated in which the locking pin is moved into the locking position (for example green) and another position (for example red) in which the locking pin is moved back into the coupling pin.

The angle between the longitudinal axes as described above is preferably less than 10°.

The ball end can be attached into the accommodation element either horizontally, vertically or also at a slope.

According to a further particular arrangement of the invention, the rod of the ball end can be made thicker at the end furthest from the ball. This thickening is realized by means of swaging, and more particularly hot swaging. It will be clear that this measure of forming a thickening and swaging can be realized independent of the measures described above. This thickening produces a larger end area for joining to the primary means of coupling. One possible jointing is to make a circumferential weld between the two parts.

According to a further advantageous arrangement of the invention, the end of the rod is joined to an elongated housing in which components of the primary means of coupling are located and of which the free end is formed for insertion into the accommodation element.

The primary means of coupling, and in particular the longitudinal axis thereof, can extend somewhat at an angle to the longitudinal axis of the rod. This is dependent on the manner in which the ball end has to be inserted into the accommodation. According to a particular arrangement of the invention, particular measures are taken to prevent spurious locking. Spurious locking is a situation in which the user thinks that a perfect coupling has been achieved between the various components when in fact that is not the case. This can lead to a life-threatening decoupling when driving, with all the resulting consequences. According to the particular variant of the present invention, the secondary means of coupling, in which an accommodation is confined to receive the primary means of coupling, is provided with a recess. More particularly, there is a recess at the position where the extremity of the end of the locking pin could possibly come into contact with the housing of the primary means of coupling. The housing is rectangular in form and more particularly square-shaped so that a stable construction is achieved with relatively low use of materials.

The ball end can be arranged in the form of a sphere to realize a coupling to a trailer. According to the particular arrangement however this is specifically arranged to receive a carrier, such as a bicycle carrier on it. According to a particular arrangement thereof the ball end is made cylindrical, i.e. so that a carrier located on it can not tilt over freely.

The invention also relates to a towing hook comprising a rod construction to fasten to a vehicle in which the towing hook end element assembly as described above, and more particularly the accommodation element described above, is incorporated.

The invention will be set forth in detail below according to the typical arrangements shown in the drawing. Therein:
fig. 1 shows a schematic, partially exploded view of a first arrangement of the various components from which the assembly according to the invention is built up, wherein fig. 1A shows a schematic detail;
fig. 2 shows the arrangement according to fig. 1, partially cut away;
fig. 3 shows the construction according to fig. 1 when the ball end is initially inserted into the accommodation;

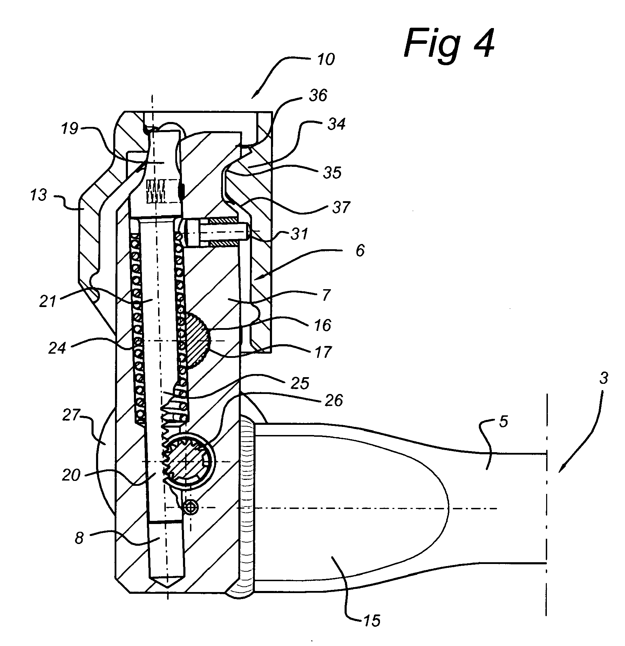

fig. 4 shows the construction according to fig. 1 and 3 when the ball end is fully inserted into the accommodation;
fig. 5 shows the horizontal arrangement variant of the assembly according to fig. 1 - 4; and
fig. 6 shows the arrangement variant suitable for accommodating a (bicycle) carrier.

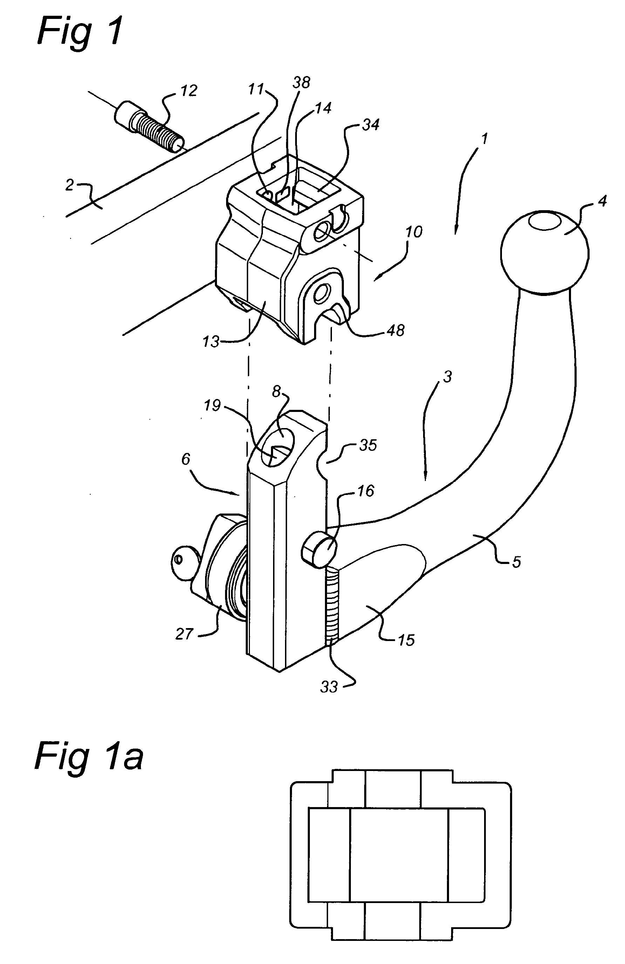

The towing hook end element assembly according to the invention is indicated as item 1 in fig. 1. This comprises a ball end 3 and an accomodation 10. The accommodation element 10 may or may not be permanently joined to a towing hook construction 2 that is connected in some manner to the towing vehicle. The arrangement shown is a accommodation element 10 provided with means of fastening such as bolt holes 11 through which bolts 12 are located for connecting to the towing hook construction 2.

Such bolt holes 11 are preferably provided with a helical thread so that the bolts 12 can grip into the accommodation element 10 from both sides and do not extend over the entire length (width) of the accommodation element 10. Such a construction simplifies mounting and avoids the threaded parts protruding at one side of the towing hook construction 2.

At either end inside the accommodation element 10 there are guide lugs 39 provided to receive the ball end as described hereinafter. Because these guide lugs are provided only these components have to conform to a precise tolerance. (Plastic) plates 38 and 40 can be used to close off the opposing openings in the accommodation element 10. Naturally the closing plate 40 is removable so the ball end can be inserted.

In fig. 1a a front view of the accommodation element 10 is shown schematically. It is apparent that this is a stable square-shaped construction combining high strength with a low weight.

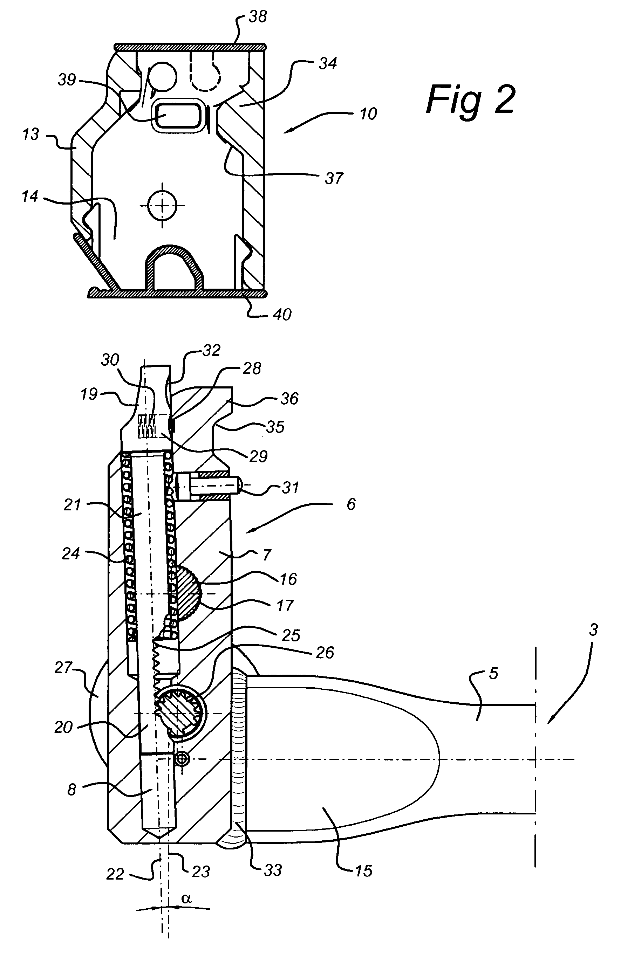

The ball end 3 is provided with a ball 4 joined to a rod 5. The primary means of coupling 6 extend out perpendicular from said rod. The connection between the rod 5 and the primary means of coupling 6 is realized by means of a circumferential weld 33. In order to provide as great an area as possible between the end 15 of the rod 5 and the primary means of coupling 6, said end 15 is enlarged by means of hot swaging. As a result, the diameter of the rod 5 can also be kept smaller at other locations so the location of any possible failure can be more precisely defined. In the primary means of coupling 6, in the bore 8 of the coupling pin, a locking pin 21 can be moved back and forth along its longitudinal axis 22 (fig. 2). The longitudinal axis of the coupling pin is shown as item 23 and it is apparent from the drawings that an angle α exists between these longitudinal axes.

The locking pin 21 is driven by means of a compression spring 24 in the direction wherein the end 19 is moved out of the coupling pin 7.

At the end 20 of the locking pin 21, opposite the end 19, the locking pin 21 is provided with rack-type teeth 25. This can be moved by driving the cog wheel 26 which extends through the coupling pin 7 and can be driven by means of a rotary knob 27.

There is a bore 30 in the locking pin 21 in which a compression spring 29 is arranged and also a blocking pin 28 located on the compression spring. In the free state this blocking pin 28 protrudes out of the locking pin 21.

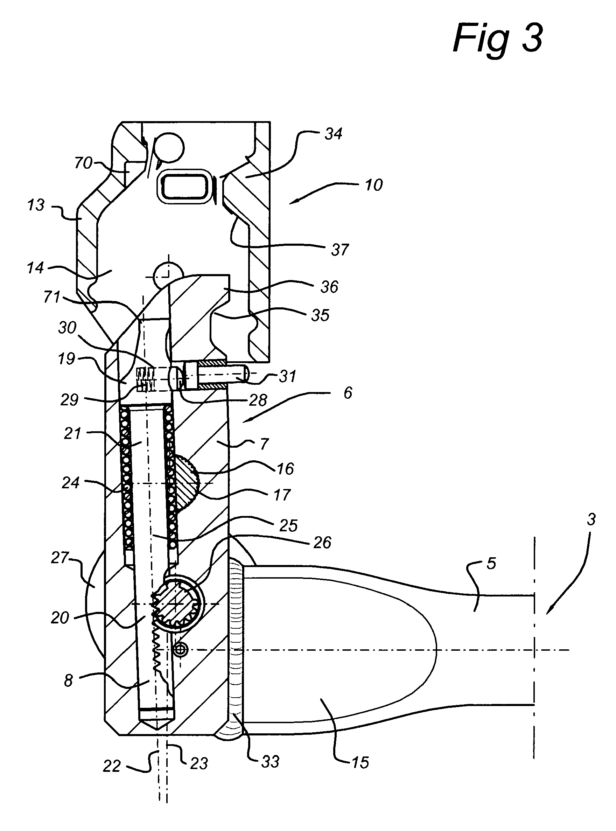

The coupling pin 7 is provided with a bore 30 (fig.3) in which a contra-blocking pin 31 can move freely.

At the end 19, the locking pin is provided with a plastic plug 32 which prevents it becoming clamped tight. The coupling pin 7 is provided with a recess 35 followed by a protrusion 36.

The accommodation element comprises secondary means of coupling 13 comprising an accommodation 14. Also recesses 18 are provided to receive the force-absorbing pin 16 located in the bore 17 of the coupling pin 7. To increase the bearing surface, the force-absorbing pin can be of a flattened construction. It is apparent from the drawings that because of the bore 8, and more particularly the locking pin 21 located within it, and the spring 24 extending around it, the force-absorbing pin 16 can not be made entirely cylindrical.

The accommodation 14 is provided with a lug 34 and a guide 37 located next to it.

The construction described in the foregoing functions as follows. Before insertion the user moves the knob 27 such that the locking pin 21 is moved inward in the coupling pin 7. This is indicated by a coloured marking on the rotary knob (e.g. red). If the user does not do so it is impossible to insert the coupling pin 7 into the accommodation 14. As long as the end 19 is moved outward, the protrusion 36 can never move past the lug 34. When the locking pin 21 is turned back this is however possible. When turning it back, when the bore 30 and the blocking pin 28 are located opposite each other, the spring 29 causes the blocking pin 28 to move slightly into the bore 30 whereby the contra-blocking pin 31 is shifted slightly out of the coupling pin 7. Consequently the locking pin is blocked by the spring in the stressed state.

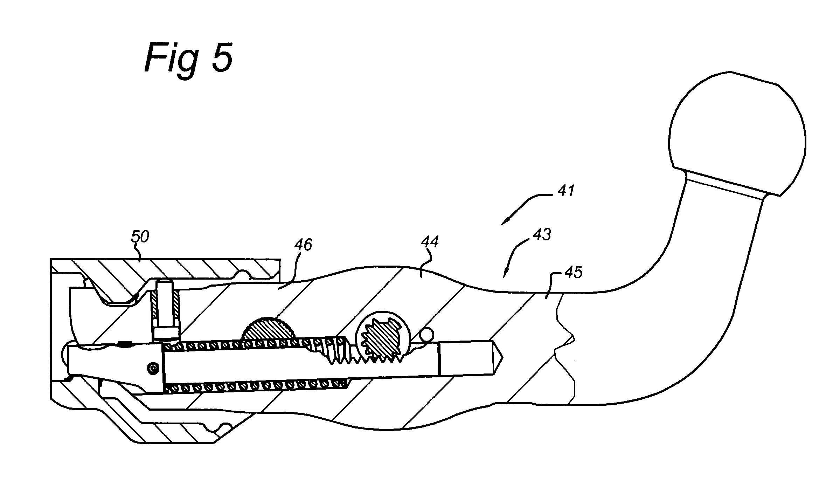

Subsequently the user moves the ball end 6, and more particularly the coupling pin 7 into the accommodation 14. When it is move far enough inward, because the end 19 is moved back into the coupling pin 7, the protrusion 36 can move past the lug 34 with no problem. At the same time the contra-blocking pin 31 comes into contact with the guide 37 whereby the contra-blocking pin 31 slides further into the bore 30 and pushes the blocking pin 28 out of the coupling pin 7. Consequently the locking pin is disengaged and the spring force causes the end 19 to move outward, thus causing the part 36 to be wedged behind the lug. This motion of the locking pin 21 causes the knob 27 to rotate, which action is indicated by another coloured marking such as green. The safe condition is therefore achieved. In this condition the upper end of the pin is preferably located at a small distance from the upper end 48 of the related slot in the accommodation element 10. As a result, if various tolerances arise later, a force-absorbing pin 16 can be moved further upward without operating problems occurring. Uncoupling is performed in reverse sequence, i.e. by operating the rotary knob 27. The knob 27 is preferably attached at a number of discrete positions in relation to the pinion until a single construction suffices for the arrangement described above, which is further detailed below on the basis of fig. 5.

By positioning the longitudinal axes 22 and 23 under an angle, extra space is provided for the pinion 26 and for the part of the force-absorbing pin 16 that is located in the central part of the coupling pin 7. As a result the construction can be made lighter and/or stronger.

The various components described for this are provided with arrangements for storing and possibly supplying lubricants.

In order to prevent spurious locking due to the extremity 71 of the end 19 clamping tight onto the secondary means of coupling 13, there is a recess 70 that definitely prevents such jamming - that can seem like locking - from occurring.

Fig. 5 shows a variant of the present invention. This is indicated in its entirety as item 41 and comprises a ball end 43 and a accommodation element 50. A housing is connected to the rod 45 of the ball end 43, in which the primary means of coupling are incorporated. The most significant change in comparison to the variant described above is that the ball end should be inserted into the accommodation in a horizontal direction.

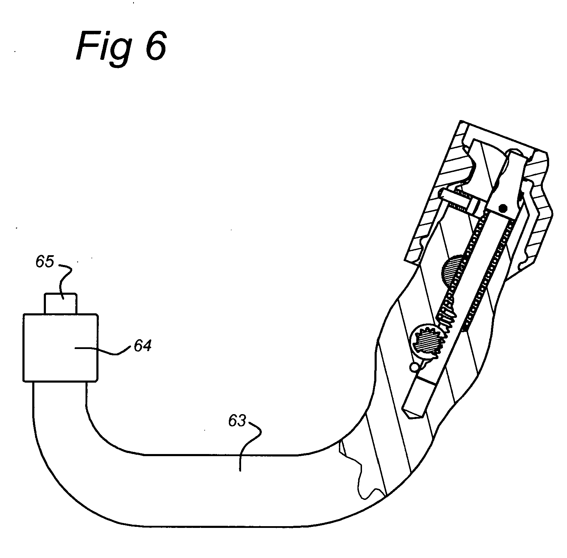

Fig. 6 shows a variant in which only the ball end 63 and the related ball 64 are indicated. This is cylindrical in shape, with a flattened upper surface from which a pin 65 protrudes. This particularly suitable to accept a carrier such as a bicycle carrier. Naturally this construction can be inserted into the related fixing of the assembly either horizontally, vertically or at an angle. It is possible to arrange the accommodation element such that only the ball ends 63 can be attached, i.e. not the ball ends as described in the foregoing.

Fig. 5 and 6 show variants of the invention. The variant according to fig. 5 is indicated in its entirety as item 41 and comprises a ball end 43 and an accommodation element 50. A housing 44 is connected to the rod 45 of the ball end 43, in which the primary means of coupling are incorporated. A corresponding variant is shown in fig. 6, wherein the assembly is indicated in its entirety as item 61 and the housing as item 64. In this manner, on the basis of a standard housing connected by simple means to various embodiments of rods 5, 45, further cost savings can be achieved because it can be based on universal primary means of coupling.

After reading the foregoing, it will soon occur to those skilled in the prior art that variants are possible.

## Claims

1. Towing hook end element assembly (1, 41, 61) comprising a ball end (3) with a ball element (4), a rod (5) and primary means of coupling (6) connected to the rod, an accommodation element (10) provided with means of fastening (11) for fastening to a towing hook construction (2) and secondary means of coupling (13), wherein the primary and secondary means of coupling can be locked and unlocked interactively, wherein the primary means of coupling comprise a coupling pin (7) with a primary longitudinal axis (23) and a locking pin (21) arranged so it can move within the coupling pin and having a secondary longitudinal axis (22), the primary extremity (19) of said locking pin can move out of the coupling pin (7), wherein the secondary means of coupling comprise an accommodation (14) to receive the coupling pin (7) and the extremity (19) of the locking pin that can move out of the coupling pin, wherein the primary (23) and secondary (22) longitudinal axes are at an angle to each other of at least 2°, wherein the coupling pin (7) comprises a primary auxiliary device (26) **characterized by** a secondary auxiliary device (17) located nearer to the primary extremity of the locking pin (21), said auxiliary devices gripping onto the locking pin (21), wherein the secondary longitudinal axis (22) of the locking pin (21) is arranged, in the direction of the primary auxiliary device (26) toward the secondary auxiliary device (17), to extend away from the secondary auxiliary device (17) in respect of the longitudinal axis (23) of the coupling pin (7).

2. Assembly according to claim 1, **characterised in that** the primary (23) and secondary (22) longitudinal axes are at a maximum angle of 10° in respect of each other.

3. Assembly according to any of the preceding claims, wherein the locking pin is provided with teeth (25) at the secondary extremity (20) opposite the primary extremity and the primary auxiliary device, located in the coupling pin, is formed by a cog wheel (26) which engages with said teeth.

4. Assembly according to any of the preceding claims, wherein the secondary auxiliary device is formed by a force-absorbing pin (16) essentially extending out perpendicular to the coupling pin, said force-absorbing pin extending into a bore (17) through the coupling pin (7) and wherein the secondary means of coupling (13) comprises a recess (18) that receives the force-absorbing pin.

5. Assembly according to claims 3 and 4, wherein said bore (17) for the force-absorbing pin and the cog wheel (26) are located on one side of the locking pin in the coupling pin (7).

6. Assembly according to any of the preceding claims, wherein the primary means of coupling extend out perpendicular to the rod (5).

7. Assembly according to any of the preceding claims, wherein the rod is hot swaged at the end opposite that of the ball end.

8. Assembly according to claim 7, wherein the hot swaged end is fastened to the primary means of coupling by means of a circumferential weld (33).

9. Assembly according to any of the preceding claims in combination with claim 4, wherein at least one of the of the interacting surfaces of the force-absorbing pin (16) and the recess (18) has a flattened form in the direction of insertion.

10. Assembly according to any of the preceding claims in combination with claim 3, wherein the cog wheel is connected to an operating knob (27), which operating knob is provided with coloured indication markings.

11. Assembly according to any of the preceding claims, wherein the end of the rod (45) is connected to an elongated housing (44, 64) the end of which comprises the primary means of coupling.

12. Assembly according to any of the preceding claims, wherein the ball end (63) is provided with a cylindrical shaped ball (64).

13. Towing hook comprising a rod assembly that can be connected to a vehicle, which is connected to a towing hook end element assembly according to any of the preceding claims.

## Patentansprüche

1. Anhängerkupplungs-Endelementeanordnung (1), die ein Kugel-Ende (9) mit einem Kugelelement (4), eine Stange (5) sowie eine primäre Kupplungseinrichtung (6), die mit der Stange verbunden ist, ein Aufnahmeelement (10), das mit einer Befestigungseinrichtung (11) zum Befestigen einer Anhängerkupplungskonstruktion (2) versehen ist, und eine sekundären Kupplungsreinrichtung (13) umfasst, wobei die primäre und die sekundäre Kupplungseinrichtung interaktiv arretiert und entarretiert werden können, die primäre Kupplungseinrichtung einen Kupplungsbolzen (7) mit einer primären Längsachse (23) und einen Arretierbolzen (21) umfasst, der so eingerichtet ist, dass er sich in dem Kupplungsbolzen bewegen kann, und der eine sekundäre Längsachse (22) hat, sich das primäre äußere Ende (19) des Arretierbolzens aus dem Kupplungsbolzen (7) herausbewegen kann, die sekundäre Kupplungseinrichtung eine Aufnahme (14) zum Aufnehmen des Kupplungsbolzens (7) und des äußeren Endes (19) des Arretierbolzens umfasst, das sich aus dem Kupplungsbolzen herausbewegen kann, die primäre (23) und die sekundäre Längsachse (22) in einem Winkel von mindestens 2° zueinander angeordnet sind, und der Kupplungsbolzen (7) eine primäre Hilfseinrichtung (26) umfasst, **gekennzeichnet durch** eine sekundäre Hilfseinrichtung (17), die sich näher an dem primären äußeren Ende des Arretierbolzens (21) befindet, wobei die Hilfseinrichtungen den Arretierbolzen (21) angriefen, die sekundäre Längsachse (22) des Arretierbolzens (21) in der Richtung der primären Hilfseinrichtung (26) auf die sekundäre Hilfseinrichtung (17) zu angeordnet ist, so dass sie sich in Bezug auf die Längsachse (23) des Kupplungsbolzens (7) von der sekundären Hilfseinrichtung (17) wegerstreckt.

2. Anordnung nach Anspruch 1, **dadurch gekennzeichnet, dass** die primäre (23) und die sekundäre Längsachse (22) in einem maximalen Winkel von 10° in Bezug zueinander angeordnet sind.

3. Anordnung nach einem der vorangehenden Ansprüche, wobei der Arretierbolzen mit Zähnen (25) an dem sekundären äußeren Ende (22) gegenüber dem primären äußeren Ende versehen ist und die primäre Hilfseinrichtung, die sich in dem Kupplungsbolzen befindet, durch ein Zahnrad (26) gebildet wird, das mit den Zähnen in Eingriff ist.

4. Anordnung nach einem der vorangehenden Ansprüche, wobei die sekundäre Hilfseinrichtung durch einen kraftabsorbierenden Bolzen (16) gebildet wird, der sich im Wesentlichen senkrecht zu dem Kupplungsbolzen nach außen erstreckt, und sich der kraftabsorbierende Bolzen durch den Kupplungsbolzen (7) hindurch in eine Bohrung (17) hineinerstreckt, und die sekundäre Kupplungseinrichtung (13) eine Vertiefung (18) umfasst, die den kraftabsorbierenden Bolzen aufnimmt.

5. Anordnung nach Anspruch 3 oder 4, wobei sich die Bohrung (17) für den kraftabsorbierenden Bolzen und das Zahnrad an anderer Seite des Arretierbolzens in dem Kupplungsbolzen (7) befinden.

6. Anordnung nach einem der vorangehenden Ansprüche, wobei sich die primäre Kupplungseinrichtung senkrecht zu der Stange (5) nach außen erstreckt.

7. Anordnung nach einem der vorangehenden Ansprüche, wobei die Stange an dem dem Kugel-Ende gegenüberliegenden Ende warmgehämmert ist.

8. Anordnung nach Anspruch 7, wobei das warmgehämmerte Ende mittels einer Umfangsverschweißung (33) an der primären Kupplungseinrichtung befestigt ist.

9. Anordnung nach einem der vorangehenden Ansprüche in Kombination mit Anspruch 4, wobei wenigstens eine der in Wechselwirkung befindlichen Flächen des kraftabsorbierenden Bolzens (16) und der Vertiefung (18) eine abgeflachte Form in der Einführrichtung hat.

10. Anordnung nach einem der vorangehenden Ansprüche in Kombination mit Anspruch 3, wobei das Zahnrad mit einem Betätigungsknopf (27) verbunden ist und der Betätigungsknopf mit farbigen Anzeigemarkierungen versehen ist.

11. Anordnung nach einem der vorangehenden Ansprüche, wobei das Ende der Stange (45) mit einem länglichen Gehäuse (2) verbunden ist, dessen Ende die primäre Kupplungseinrichtung umfasst.

12. Anordnung nach einem der vorangehenden Ansprüche, wobei das Kugel-Ende (63) mit einer zylindrisch geformten Kugel (64) versehen ist.

13. Anhängerkupplung, die eine Stangenordnung umfasst, die mit einem Fahrzeug verbunden werden kann und die mit einer Anhängerkupplungs-Endelementanordnung nach einem der vorangehenden Ansprüche verbunden ist.

## Revendications

1. Ensemble structurel d'extrémité (1, 41, 61) pour crochet de remorquage, comprenant un embout sphérique (3) présentant une rotule (4), une barre (5) et des moyens d'accouplement primaires (6) reliés à ladite barre, un élément (10) formant logement et muni de moyens de fixation (11) dévolus à la fixation à une structure de crochet de remorquage (2), et des moyens d'accouplement secondaires (13), lesdits moyens d'accouplement primaires et secondaires pouvant être verrouillés et déverrouillés en mode interactif, les moyens d'accouplement primaires comprenant une cheville d'accouplement (7) dotée d'un axe longitudinal primaire (23), et une goupille de verrouillage (21) munie d'un axe longitudinal secondaire (22) et agencée avec faculté de mouvement à l'intérieur de ladite cheville d'accouplement, la région extrême primaire (19) de ladite goupille de verrouillage pouvant sortir de ladite cheville d'accouplement (7), lesdits moyens d'accouplement secondaires offrant une cavité réceptrice (14) conçue pour recevoir ladite cheville d'accouplement (7) et ladite région extrême (19) de la goupille de verrouillage qui est apte à sortir de ladite cheville d'accouplement, sachant que les axes longitudinaux primaire (23) et secondaire (22) décrivent mutuellement un angle d'au moins 2°, ladite cheville d'accouplement (7) présentant un dispositif auxiliaire (26) primaire, **caractérisé par** un dispositif auxiliaire (17) secondaire, occupant une position plus rapprochée de la région extrême primaire de la goupille de verrouillage (21), lesdits dispositifs auxiliaires venant en prise avec ladite goupille de verrouillage (21), sachant que l'axe longitudinal secondaire (22) de ladite goupille de verrouillage (21) est agencé, dans la direction du dispositif auxiliaire (26) primaire pointant vers le dispositif auxiliaire (17) secondaire, de manière à s'éloigner dudit dispositif auxiliaire (17) secondaire vis-à-vis de l'axe longitudinal (23) de la cheville d'accouplement (7).

2. Ensemble structurel selon la revendication 1, **caractérisé par le fait que** les axes longitudinaux primaire (23) et secondaire (22) décrivent, l'un par rapport à l'autre, un angle de 10° au maximum.

3. Ensemble structurel selon l'une quelconque des revendications précédentes, dans lequel la goupille de verrouillage est pourvue de dents (25) au niveau de la région extrême secondaire (20) tournée à l'opposé de la région extrême primaire, et le dispositif auxiliaire primaire, logé dans la cheville d'accouplement, revêt la forme d'une roue dentée (26) qui engrène dans lesdites dents.

4. Ensemble structurel selon l'une quelconque des revendications précédentes, dans lequel le dispositif auxiliaire secondaire revêt la forme d'une broche (16) d'absorption de forces, s'étendant pour l'essentiel vers l'extérieur perpendiculairement à la cheville d'accouplement, ladite broche d'absorption de forces s'engageant dans un alésage (17) qui traverse ladite cheville d'accouplement (7), les moyens d'accouplement secondaires (13) comportant un évidement (18) qui reçoit ladite broche d'absorption de forces.

5. Ensemble structurel selon les revendications 3 et 4, dans lequel ledit alésage (17) affecté à la broche d'absorption de forces, et la roue dentée (26), sont situés dans la cheville d'accouplement (7) sur l'un des côtés de la goupille de verrouillage.

6. Ensemble structurel selon l'une quelconque des revendications précédentes, dans lequel les moyens d'accouplement primaires s'étendent vers l'extérieur, perpendiculairement à la barre (5).

7. Ensemble structurel selon l'une quelconque des revendications précédentes, dans lequel la barre est matricée à chaud à l'extrémité pointant à l'opposé de celle de l'embout sphérique.

8. Ensemble structurel selon la revendication 7, dans lequel l'extrémité matricée à chaud est fixée aux moyens d'accouplement primaires, à l'aide d'une soudure circonférentielle (33).

9. Ensemble structurel selon l'une quelconque des revendications précédentes, en combinaison avec la revendication 4, dans lequel au moins l'une des surfaces interactives de la broche (16) d'absorption de forces, et de l'évidement (18), présente une forme aplatie dans la direction d'insertion.

10. Ensemble structurel selon l'une quelconque des revendications précédentes, en combinaison avec la revendication 3, dans lequel la roue dentée est reliée à un bouton d'actionnement (27), lequel bouton d'actionnement est pourvu de repères indicateurs colorés.

11. Ensemble structurel selon l'une quelconque des revendications précédentes, dans lequel l'extrémité de la barre (45) est reliée à un carter allongé (44, 64), dont l'extrémité comporte les moyens d'accouplement primaires.

12. Ensemble structurel selon l'une quelconque des revendications précédentes, dans lequel l'embout sphérique (63) est doté d'une rotule (64) de configuration cylindrique.

13. Crochet de remorquage équipé d'un ensemble structurel à barre pouvant être rattaché à un véhicule, qui est relié à un ensemble structurel d'extrémité conforme à l'une quelconque des revendications précédentes, associé audit crochet de remorquage.
